# FASCICULE DE BREVET EUROPEEN

(11) **EP 3 242 822 B1**
(45) Date de publication et mention de la délivrance du brevet: **14.07.2021**
(21) Numéro de dépôt: 15825612.3
(22) Date de dépôt: 09.12.2015
(51) Int. Cl.: B60W 50/02, B60W 50/029

(54) **PROCÉDÉ ET DISPOSITIF DE DÉTECTION D'UN DÉFAUT DE FONCTIONNEMENT D'UNE PÉDALE D'ACCÉLÉRATEUR DE VÉHICULE, PAR VÉRIFICATION DE L'UTILISATION DE LA PÉDALE D'EMBRAYAGE**
VERFAHREN UND VORRICHTUNG ZUR DETEKTION EINER FEHLFUNKTION EINES FAHRZEUGGASPEDALS DURCH ÜBERPRÜFUNG DER BENUTZUNG DES KUPPLUNGSPEDALS
METHOD AND DEVICE FOR DETECTING A MALFUNCTION OF A VEHICLE ACCELERATOR PEDAL, BY VERIFYING THE USE OF THE CLUTCH PEDAL

(30) Priorité: 05.01.2015 FR 1550011
(43) Date de publication de la demande: 15.11.2017
(73) Titulaire: PSA Automobiles SA, 78300 Poissy (FR)
(72) Inventeur: CAMP, Stéphane, 92000 Nanterre (FR); THENEGAL, Cécile, 92250 La Garenne Colombes (FR); LA TOUR, Coralie, 95430 Auvers sur Oise (FR)
(86) Numéro de dépôt international: PCT/FR2015/053386
(87) Numéro de publication internationale: WO 2016/110620

(56) Documents cités:
- EP-A1- 2 559 886
- DE-A1- 10 337 341
- DE-A1-102005 023 877

## Description

L'invention concerne les véhicules comprenant un groupe motopropulseur comportant un moteur thermique couplé à une boîte de vitesses à commande manuelle, et plus précisément la détection d'un défaut de fonctionnement de la pédale d'accélérateur au sein de tels véhicules.

Comme le sait l'homme de l'art, de nombreux véhicules du type précité, et généralement de type automobile, comprennent un dispositif destiné à détecter un défaut de fonctionnement de leur pédale d'accélérateur, et plus précisément un défaut entraînant une accélération non voulue par leur conducteur. Ce défaut peut résulter soit d'un blocage de la pédale d'accélérateur du fait de la présence d'un objet (comme par exemple un tapis de sol mal positionné ou un objet tombé dans la cave à pieds) ou d'un coincement induit par un problème mécanique, soit du fait que le conducteur ne sait plus ce qu'il doit faire et donc utilise simultanément les pédale de frein et pédale d'accélérateur, soit encore du fait que les données représentatives de l'utilisation de la pédale d'accélérateur et/ou de la pédale de frein sont erronées en raison d'une défaillance de composant(s) électronique(s) et/ou d'un problème de traitement informatique.

On connaît le document de brevet DE-A-10 2005 023 877 divulguant le préambule de la revendication 1.

Ce type de détection de défaut s'avère hélas mal adapté à certaines situations pour lesquelles il induit un fonctionnement du groupe motopropulseur (ou GMP) du véhicule dans un mode dégradé non souhaité, voire opposé à l'objectif recherché. C'est notamment le cas lorsque le conducteur utilise volontairement simultanément les pédale de frein et pédale d'accélérateur du fait qu'il conduit sportivement en utilisant la technique dite « talon-pointe », ou lorsqu'un moniteur d'auto-école utilise en double commande la pédale de frein alors que le conducteur utilise la pédale d'accélérateur, ou inversement.

L'invention a donc notamment pour but d'améliorer la situation.

Elle propose notamment à cet effet un procédé, destiné à permettre la détection d'un défaut de fonctionnement d'une pédale d'accélérateur d'un véhicule comprenant en outre une pédale de frein et une pédale d'embrayage, et comprenant une étape dans laquelle, en cas de détection d'une utilisation simultanée des pédale de frein et pédale d'accélérateur, on vérifie si la pédale d'embrayage est utilisée, et dans la négative on déduit de cette vérification que la pédale d'accélérateur fait l'objet d'un défaut de fonctionnement, et on fait fonctionner un groupe motopropulseur du véhicule dans un mode dégradé.

L'utilisation de l'information relative à la pédale d'embrayage permet d'éviter de considérer qu'il y a un défaut de fonctionnement de la pédale d'accélérateur et donc un fonctionnement du groupe motopropulseur dans un mode dégradé, notamment lorsque le conducteur utilise une technique de conduite de type talon-pointe pendant qu'il effectue un changement de vitesse (ou rapport), ou qu'un moniteur d'auto-école utilise en double commande la pédale de frein ou d'accélérateur alors que le conducteur utilise la pédale d'accélérateur ou de frein et la pédale d'embrayage pendant un changement de vitesse (ou rapport), ou inversement.

Par exemple, avant de faire fonctionner le groupe motopropulseur dans le mode dégradé, on peut effectuer une seconde vérification de l'utilisation de la pédale d'embrayage de manière à n'ordonner l'instauration du mode dégradé que si la pédale d'embrayage n'est toujours pas utilisée.

Egalement par exemple, le mode dégradé peut comprendre une réduction du couple fourni par le groupe motopropulseur.

L'invention propose également un dispositif, destiné à détecter un défaut de fonctionnement d'une pédale d'accélérateur d'un véhicule comprenant en outre une pédale de frein et une pédale d'embrayage, et comprenant :
- des moyens d'analyse agencés, en cas de détection d'une utilisation simultanée des pédale de frein et pédale d'accélérateur, pour vérifer si la pédale d'embrayage est utilisée, et dans la négative pour délivrer un signal représentatif d'un défaut de fonctionnement de la pédale d'accélérateur, et
- des moyens de contrôle agencés, en cas de réception de ce signal, pour déclencher un fonctionnement d'un groupe motopropulseur du véhicule dans un mode dégradé.

Les moyens d'analyse sont en outre agencés pour effectuer une seconde vérification de l'utilisation de la pédale d'embrayage afin de ne délivrer le signal que si la pédale d'embrayage n'est toujours pas utilisée.

Egalement par exemple, les moyens de contrôle peuvent être agencés, en cas de réception du signal, pour déclencher un fonctionnement du groupe motopropulseur du véhicule dans un mode dégradé comprenant une réduction du couple qu'il fournit.

L'invention propose également un calculateur, destiné à équiper un véhicule comprenant un groupe motopropulseur, une pédale d'accélérateur, une pédale de frein et une pédale d'embrayage, et comprenant un dispositif de détection du type de celui présenté ci-avant.

L'invention propose également un véhicule, éventuellement de type automobile, et comprenant un groupe motopropulseur, une pédale d'accélérateur, une pédale de frein, une pédale d'embrayage, et un calculateur du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement un exemple de véhicule comprenant un groupe motopropulseur, à moteur thermique et boîte de vitesses à commande manuelle, et un calculateur de supervision comprenant un dispositif de détection selon l'invention, et
- la figure 2 illustre schématiquement un exemple d'algorithme mettant en œuvre un procédé de détection selon l'invention.

L'invention a notamment pour but de proposer un procédé de détection, et un dispositif de détection associé, destinés à permettre la détection d'un défaut de fonctionnement d'une pédale d'accélérateur PA d'un véhicule V comprenant en outre un groupe motopropulseur (ou GMP) comportant un moteur thermique MT couplé à une boîte de vitesses BV à commande manuelle.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule comprenant un groupe motopropulseur comportant un moteur thermique couplé à une boîte de vitesses à commande manuelle. Par conséquent, elle concerne notamment les véhicules terrestres tels que, par exemple, les voitures, les cars (ou bus), les camions, les engins de voirie et les engins de chantier.

Par ailleurs, on considère dans ce qui suit, à titre d'exemple non limitatif, que le groupe motopropulseur ne comprend qu'un moteur thermique MT. Mais il pourrait être de type hybride et donc comprendre au moins un moteur thermique et au moins une machine (ou moteur), électrique ou hydraulique ou encore à air comprimé, associé(e) à des moyens de stockage d'énergie.

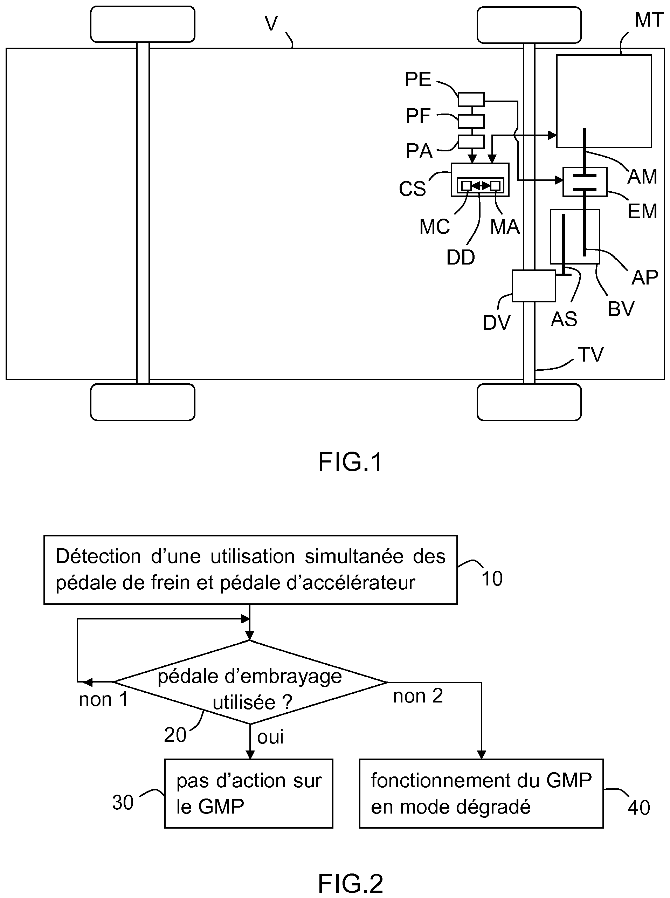

On a schématiquement illustré sur la figure 1 un exemple non limitatif de véhicule V à groupe motopropulseur (ici conventionnel). Comme illustré, ce véhicule V comprend, d'une part, un groupe motopropulseur comportant notamment un moteur thermique MT, un arbre moteur AM, un embrayage EM, une boîte de vitesses BV à commande manuelle, un calculateur de supervision CS, et, d'autre part, une pédale d'embrayage PE, une pédale de frein PF et une pédale d'accélérateur PA.

Le moteur thermique MT comprend un vilebrequin qui définit l'arbre moteur AM, destiné à fournir du couple.

La boîte de vitesses BV comprend (ici) un arbre primaire (ou d'entrée) AP et au moins un arbre secondaire (ou de sortie) AS, destinés à être couplés l'un à l'autre en vue de transmettre du couple. L'arbre primaire AP est destiné à recevoir le couple moteur via l'embrayage EM et comprend des pignons destinés à participer à la définition des différents rapports (ou vitesses) sélectionnables de la boîte de vitesses BV. L'arbre secondaire AS est destiné à recevoir le couple moteur via l'arbre primaire AP afin de le communiquer à un train (ici le train avant TV), via un différentiel DV. Cet arbre secondaire AS comprend des pignons destinés à engrener certains pignons de l'arbre primaire AP afin de participer à la définition des différents rapports (ou vitesses) sélectionnables de la boîte de vitesses BV.

L'embrayage EM comprend notamment un volant moteur qui est solidarisé fixement à l'arbre moteur AM et un disque d'embrayage qui est solidarisé fixement à l'arbre primaire AP. La position du disque d'embrayage est ici contrôlée par la pédale d'embrayage PE.

Le fonctionnement du groupe motopropulseur est contrôlé par le calculateur de supervision CS qui connaît notamment à chaque instant la mesure du régime en cours du moteur thermique MT, la charge du moteur thermique MT, et l'état (ou niveau) d'enfoncement des pédales de frein PF, d'embrayage PE et d'accélérateur PA.

Comme indiqué plus haut, l'invention propose notamment de mettre en œuvre dans un véhicule V un procédé destiné à permettre la détection d'un défaut de fonctionnement de la pédale d'accélérateur PA.

Il est important de noter que le procédé de détection décrit ci-après est une sous-partie du procédé global de diagnostic d'accélération intempestive qui prend en compte toutes les causes répertoriées, bien connues de l'homme de l'art et mentionnées dans la partie introductive.

La mise en œuvre du procédé (de détection) peut se faire au moyen d'un dispositif de détection DD. On notera que dans l'exemple illustré non limitativement sur la figure 1, le dispositif de détection DD fait partie du calculateur de supervision CS. Mais cela n'est pas obligatoire. En effet, le dispositif de détection DD pourrait être lui-même agencé sous la forme d'un calculateur dédié comprenant un éventuel programme dédié et couplé au calculateur de supervision CS, ou bien faire partie d'un autre calculateur embarqué dans le véhicule V. Par conséquent, un dispositif de détection DD, selon l'invention, peut être réalisé sous la forme de modules logiciels (ou informatiques (ou encore « software »)), ou bien de circuits électroniques (ou « hardware »), ou encore d'une combinaison de circuits électroniques et de modules logiciels.

Le dispositif de détection DD comprend des moyens d'analyse MA et des moyens de contrôle MC.

Le procédé (de détection), selon l'invention, comprend une étape qui débute lorsqu'on (les moyens d'analyse MA du dispositif DD) détecte(nt) une utilisation simultanée des pédale de frein PF et pédale d'accélérateur PA.

Cette première sous-étape de détection correspond à la sous-étape 10 de l'exemple d'algorithme de la figure 2.

Lorsqu'une telle détection survient, l'étape du procédé se poursuit par une deuxième sous-étape dans laquelle on (les moyens d'analyse MA du dispositif DD) vérifie(nt) si la pédale d'embrayage PE est utilisée.

Cette deuxième sous-étape de vérification correspond à la sous-étape 20 de l'exemple d'algorithme de la figure 2.

Si la pédale d'embrayage PE est utilisée (situation affirmative - « oui »), cela signifie soit que le conducteur du véhicule V utilise une technique de conduite de type talon-pointe pendant qu'il effectue un changement de vitesse (ou rapport), soit qu'un moniteur d'auto-école utilise en double commande la pédale de frein PF ou d'accélérateur PA alors que le conducteur utilise la pédale d'accélérateur PA ou de frein PF et la pédale d'embrayage PE pendant un changement de vitesse (ou rapport), ou inversement. Par conséquent, on n'est pas en présence d'un défaut de fonctionnement de la pédale d'accélérateur PA, et donc l'étape du procédé prend fin sans modification du fonctionnement du groupe motopropulseur (ou GMP). Cette fin correspond à la sous-étape 30 de l'exemple d'algorithme de la figure 2.

En revanche, si la pédale d'embrayage PE n'est pas utilisée (situation négative - « non 1 » (ou « non 2 »)), l'étape du procédé se poursuit par une troisième sous-étape dans laquelle on (les moyens d'analyse MA du dispositif DD) dédui(sen)t de la vérification que la pédale d'accélérateur PA fait l'objet d'un défaut de fonctionnement, et on fait fonctionner le groupe motopropulseur (ou GMP) dans un mode dégradé. Dans ce cas, les moyens d'analyse MA délivrent un signal qui est représentatif d'un défaut de fonctionnement de la pédale d'accélérateur PA, et les moyens de contrôle MC sont agencés, lorsqu'ils reçoivent ce signal, pour déclencher le fonctionnement du groupe motopropulseur dans un mode dégradé, en le requérant auprès du calculateur de supervision CS. Ce signal peut être de type analogique ou numérique.

Cette troisième sous-étape de vérification correspond à la sous-étape 40 de l'exemple d'algorithme de la figure 2.

Par exemple, le mode dégradé peut comprendre une réduction du couple qui est fourni par le groupe motopropulseur, et plus précisément par le moteur thermique MT au niveau de l'arbre moteur AM. Cet agencement est destiné à réduire le niveau d'accélération qui correspond à la position dans laquelle la pédale d'accélérateur PA apparaît bloquée, et qui pourrait s'avérer (très) dangereux.

On notera, comme illustré non limitativement sur la figure 2, qu'avant de faire fonctionner le groupe motopropulseur dans le mode dégradé (sous-étape 40), il est avantageux d'effectuer une seconde vérification de l'utilisation de la pédale d'embrayage PE (sous-étape 20) de manière à n'ordonner l'instauration du mode dégradé que si la pédale d'embrayage PE n'est toujours pas utilisée (« non 2 »). Cette option est destinée à éviter de modifier inutilement le fonctionnement du groupe motopropulseur suite à une erreur de très courte durée du conducteur au niveau des pédales.

On notera également qu'au lieu de réitérer seulement la sous-étape 20, on peut réitérer les sous-étapes 10 et 20. Cette option est destinée à éviter de modifier inutilement le fonctionnement suite à une erreur de très courte durée du conducteur au niveau des pédales ou d'un très bref dysfonctionnement matériel ou logiciel.

## Revendications

1. Procédé de détection d'un défaut de fonctionnement d'une pédale d'accélérateur (PA) d'un véhicule (V) comprenant en outre une pédale de frein (PF) et une pédale d'embrayage (PE), **caractérisé en ce qu'**il comprend une étape dans laquelle, en cas de détection d'une utilisation simultanée desdites pédale de frein (PF) et pédale d'accélérateur (PA), on vérifie si ladite pédale d'embrayage (PE) est utilisée, et dans la négative on déduit de cette vérification que ladite pédale d'accélérateur (PA) fait l'objet d'un défaut de fonctionnement, et on fait fonctionner un groupe motopropulseur dudit véhicule (V) dans un mode dégradé, ledit procédé étant en outre **caractérisé en ce qu'**avant de faire fonctionner ledit groupe motopropulseur dans le mode dégradé, on effectue une seconde vérification de l'utilisation de ladite pédale d'embrayage (PE) de manière à n'ordonner l'instauration dudit mode dégradé que si ladite pédale d'embrayage (PE) n'est toujours pas utilisée.

2. Procédé selon la revendication 1, **caractérisé en ce que** ledit mode dégradé comprend une réduction du couple fourni par ledit groupe motopropulseur.

3. Dispositif (DD) de détection d'un défaut de fonctionnement d'une pédale d'accélérateur (PA) d'un véhicule (V) comprenant en outre une pédale de frein (PF) et une pédale d'embrayage (PE), **caractérisé en ce qu'**il comprend des moyens d'analyse (MA) agencés, en cas de détection d'une utilisation simultanée desdites pédale de frein (PF) et pédale d'accélérateur (PA), pour vérifier si ladite pédale d'embrayage (PE) est utilisée, et dans la négative pour délivrer un signal représentatif d'un défaut de fonctionnement de ladite pédale d'accélérateur (PA), ledit dispositif (DD) comportant en outre des moyens de contrôle (MC) agencés, en cas de réception dudit signal, pour déclencher un fonctionnement d'un groupe motopropulseur dudit véhicule (V) dans un mode dégradé et **en ce que** lesdits moyens d'analyse (MA) sont agencés pour effectuer une seconde vérification de l'utilisation de ladite pédale d'embrayage (PE) afin de ne délivrer ledit signal que si ladite pédale d'embrayage (PE) n'est toujours pas utilisée.

4. Dispositif selon la revendications, **caractérisé en ce que** lesdits moyens de contrôle (MC) sont agencés, en cas de réception dudit signal, pour déclencher un fonctionnement dudit groupe motopropulseur dans un mode dégradé comprenant une réduction du couple fourni par ledit groupe motopropulseur.

5. Calculateur (CS) pour un véhicule (V) comprenant un groupe motopropulseur, une pédale d'accélérateur (PA), une pédale de frein (PF) et une pédale d'embrayage (PE), **caractérisé en ce qu'**il comprend un dispositif de détection (DD) selon l'une des revendications 3 ou 4.

6. Véhicule (V) comprenant un groupe motopropulseur, une pédale d'accélérateur (PA), une pédale de frein (PF) et une pédale d'embrayage (PE), **caractérisé en ce qu'**il comprend en outre un calculateur (CS) selon la revendication 5.

7. Véhicule selon la revendication 6, **caractérisé en ce qu'**il est de type automobile.

## Patentansprüche

1. Verfahren zum Erfassen eines Fehlers einer Betätigung eines Gaspedals (PA) eines Fahrzeugs (V), das ferner ein Bremspedal (PF) und ein Kupplungspedal (PE) umfasst, **dadurch gekennzeichnet, dass** es einen Schritt umfasst, in dem auf Erfassung eines E verwenden gleichzeitige des Bremspedals (PF) und Fahrpedals (PA), wird geprüft, ob das Kupplungspedal (PE) wird verwendet, und in dem negativen einem folgert aus dieser Prüfung das Gaspedal wobei (PA) ist Gegenstand einer Fehlfunktion, und Betreiben eines Antriebsstrangs des Fahrzeugs (V) in einem verschlechterten Modus, wobei das Verfahren weiter dadurch charakterisiert ist, dass vor dem Betreiben des Antriebsstrangs in einem verschlechterten Modus eine zweite Überprüfung der Verwendung des Kupplungspedals (PE) durchgeführt wird, um die Einführung des verschlechterten Modus nur anordnen, wenn das Kupplungspedal (PE) noch nicht verwendet wird.

2. Verfahren nach dem Anspruch 1, **dadurch gekennzeichnet, daß** bei eingeschränktem Betrieb eine Drehmomentreduzierung umfasst, die durch den vorgesehene Antriebsstrang.

3. Vorrichtung (DD) zum Erfassen einer Fehlfunktion eines Gaspedals (PA) eines Fahrzeugs (V), ferner umfassend ein Bremspedal (PF) und ein Kupplungspedal (PE), **gekennzeichnet dadurch, dass** es Analysemittel (MA) umfasst, die in angeordnet sind das Ereignis der Erkennung der gleichzeitigen Verwendung des Bremspedals (PF) und des Gaspedals (PA), um zu überprüfen, ob das Kupplungspedal (PE) verwendet wird, und wenn nicht, um ein Signal zu liefern, das für eine Fehlfunktion des Gaspedals (PA) repräsentativ ist), wobei die Einrichtung (DD), ferner umfassend Mittel c ist trol (MC) angeordnet ist, bei Empfang des Signals, zum Trigger Betrieb von einem Antriebsstrang des Fahrzeugs (V) in einer verschlechterten Betriebsart und in DASS die Analyseeinrichtung (MA) sind so angeordnet, dass sie eine zweite Überprüfung der Verwendung des Kupplungspedals (PE) durchführen, um das Signal nur dann zu liefern, wenn das Kupplungspedal (PE) nicht alle ist Tage nicht genutzt.

4. Vorrichtung nach dem Anspruch 3, **gekennzeichnet dadurch, dass** die Steuermittel (MC) im Falle des Empfangs des Signals angeordnet sind, um einen Betrieb des Antriebsstrangs in einem verschlechterten Modus auszulösen, der eine Verringerung des von dem Antriebsstrang gelieferten Drehmoments umfasst.

5. Computer (CS) für ein Fahrzeug (V), umfassend einen Antriebsstrang, ein Gaspedal (PA), ein Bremspedal (PF) und ein Kupplungspedal (PE), **gekennzeichnet dadurch, dass** er eine Erfassungsvorrichtung (DD) gemäß einem umfasst der Ansprüche 3 oder 4.

6. Fahrzeug (V), umfassend einen Antriebsstrang, ein Gaspedal (PA), ein Bremspedal (PF) und ein Kupplungspedal (PE), **dadurch gekennzeichnet, dass** sie ferner umfassen einen Computer (CS) nach Anspruch 5.

7. Fahrzeug nach Anspruch 6, **dadurch gekennzeichnet, dass** es sich um einen Kraftfahrzeugtyp handelt.

## Claims

1. Method for detecting a failure of an operation of an accelerator pedal (PA) of a vehicle (V) further comprising a brake pedal (PF) and a clutch pedal (PE), **characterized in that** it comprises a step in which, in the event of detection of simultaneous use of said brake pedal (PF) and accelerator pedal (PA), it is checked whether said clutch pedal (PE) is used , and in the negative one deduces from this check that said accelerator pedal (PA) is the subject of a malfunction, and operating a powertrain of said vehicle (V) in a degraded mode, said method being further **characterized in that** before operating said powertrain in degraded mode, a second check of the use of said is carried out clutch pedal (PE) so as to order the introduction of said degraded mode only if said clutch pedal (PE) is still not used.

2. Method according the Claim 1, **characterized in that** said degraded mode comprises a torque reduction provided by said powertrain.

3. Device (DD) for detecting a malfunction of an accelerator pedal (PA) of a vehicle (V) further comprising a brake pedal (PF) and a clutch pedal (PE), **characterized in that** it comprises analysis means (MA) arranged, in the event of detection of simultaneous use of said brake pedal (PF) and accelerator pedal (PA), to check whether said clutch pedal (PE) is used, and if not to provide a signal representative of a malfunction of said accelerator pedal (PA), said device (DD) further comprising means c is trol (MC) arranged, in upon receipt of said signal, to trigger operation of a powertrain of said vehicle (V) in a degraded mode and **in that** said analysis means (MA) are arranged to perform a second verification of the use of said clutch pedal (PE) so as to deliver said signal only if said clutch pedal (PE) is not all days not used.

4. Device according to claim 3, **characterized in that** said control means (MC) are arranged, upon receipt of said signal, to trigger operation of said powertrain in a degraded mode comprising of a torque supplied by said powertrain.

5. Computer (CS) for a vehicle (V) comprising a powertrain, an accelerator pedal (PA), a brake pedal (PF) and a clutch pedal (PE), **characterized in that** it comprises a Detection device (DD) according to one of claims 3 or 4.

6. Vehicle (V) comprising a powertrain, an accelerator pedal (PA), a brake pedal (PF) and a clutch pedal (PE), **characterized in that** it further comprises a computer (CS) according to claim 5.

7. Vehicle according to claim 6, **characterized in that** it is of the automotive type.
